# EUROPÄISCHE PATENTSCHRIFT

(11) **EP 2 779 826 B1**
(45) Veröffentlichungstag und Bekanntmachung des Hinweises auf die Patenterteilung: **31.01.2018**
(21) Anmeldenummer: 12797685.0
(22) Anmeldetag: 08.11.2012
(51) Int. Cl.: A01K 15/04, A01K 15/02, A01K 27/00

(54) **VERFAHREN ZUR EINSCHRÄNKUNG EINER BEWEGUNGSFREIHEIT EINES HUNDES**
METHOD FOR RESTRICTING FREEDOM OF MOVEMENT OF A DOG
PROCÉDÉ POUR LIMITER LA LIBERTÉ DE MOUVEMENT D'UN CHIEN

(30) Priorität: 18.11.2011 DE 102011055487
(43) Veröffentlichungstag der Anmeldung: 24.09.2014
(73) Patentinhaber: Lauscher, Joseph, 81375 München (DE)
(72) Erfinder: Lauscher, Joseph, 81375 München (DE)
(74) Vertreter: 2SPL Patentanwälte PartG mbB
(86) Internationale Anmeldenummer: PCT/DE2012/200074
(87) Internationale Veröffentlichungsnummer: WO 2013/071930

(56) Entgegenhaltungen:
- US-A- 4 304 193
- US-A- 4 651 678
- US-A1- 2003 116 102
- US-B1- 6 874 447

## Beschreibung

Ausführungsbeispiele der vorliegenden Erfindung beziehen sich auf ein Verfahren zur Einschränkung der Bewegungsfreiheit eines Hundes. Tiere sind vorwiegend instinktgetrieben und haben meist einen großen Bewegungsbedarf. Dabei sind zumindest vierbeinige Tiere in Bezug auf ihre Bewegungsgeschwindigkeit dem Menschen oft weit überlegen. Hunde, zum Beispiel, sind weltweit sehr beliebte Haustiere, die naturgemäß aber einen sehr ausgeprägten Bewegungsdrang haben und teilweise ein vom Menschen unvorhersehbares Verhalten zeigen. Beim Ausführen von Hunden, was auch allgemein als "Gassi gehen" bezeichnet wird, kommt es immer wieder zu Situationen, in denen selbst ein gut erzogener bzw. trainierter Hund unvorhergesehen und ungewollt von der Seite seines menschlichen Halters weicht. Ein derartiges Verhalten des Hundes kann beispielsweise durch andere Hunde, Tiere oder Menschen in der Nähe ausgelöst werden. Ein oft beobachtetes Verhalten ist beispielsweise ein spontanes Aufeinander-zu- oder ein Voneinander-weg-Rennen von Hunden. Das gilt vor allem dann, wenn die Tiere von ihren Haltern nicht angeleint geführt werden und sich so ungehindert bewegen können. Die Folge von solchen spontanen Alleingängen von Hunden können beispielsweise Beißereien zwischen Hunden, Angriffe auf Menschen oder Verkehrsunfälle sein, die zu teils gravierenden körperlichen, psychischen und/oder finanziellen Schäden bei den Beteiligten führen können. Vorstellbar sind ähnlich unliebsame Situationen mit anderen vom Menschen gehaltenen Haus- und/oder Nutztieren, wie beispielsweise Pferden, Rindern, etc.

In manchen Situationen, wie z.B. den oben Beschriebenen, wäre es daher wünschenswert, die Tiere rechtzeitig in ihrer Bewegung einzuschränken, um sie somit beispielsweise vom unkontrollierten Weglaufen abhalten bzw. stoppen zu können. Aufgrund der angesprochenen körperlichen Überlegenheit vieler Tiere gegenüber dem Menschen ist dies ohne technische Hilfsmittel jedoch kaum möglich, da der Mensch meist zu langsam und/oder zu schwach ist, um die Tiere zu halten bzw. einzuholen.

Die Druckschriften US 4 304 193 A, US 2003/116102 A1 und US 4 651 678 A offenbaren Vorrichtungen zum automatisierten Reiten bzw. Zügeln von Pferden. Die US 6 874 447 B1 offenbart ein gerätegestütztes Konzept, welches es einem Jagdhund und einem Jäger ermöglicht, einander während einer Jagdexpedition zu finden.

Um Weidetiere in ihrer Bewegungsfreiheit einzuschränken und am Weglaufen zu hindern, werden beispielsweise Weidebegrenzungen eingesetzt, welche teilweise eine elektrische Spannung führen, um den Tieren gegebenenfalls einen relativ schwachen aber für sie dennoch schreckvollen elektrischen Schlag zu vermitteln.

Insbesondere für Hunde sind Elektrohalsbänder bekannt, die eingesetzt werden können, um das Tier zu "erziehen" und ihm Gehorsam beizubringen. Ein Fehlverhalten des Hundes, wie z. B. zu lautes Bellen oder unerlaubtes Entfernen vom Halter, kann so mit einem kleinen Stromschlag bestraft werden. Unter Umständen kann der Hund zwar dadurch von seinem Fehlverhalten abgebracht werden, jedoch ist eine derartige Vorgehensweise umstritten und in den Augen von Tierschützern abzulehnen. Ein Elektrohalsband arbeitet mit Reizstrom. Von Elektrohalsband-Herstellern wird zwar davon ausgegangen, dass mit dem Halsband keinerlei Gefahr für das Tier einhergeht, da die Stromstärke relativ niedrig eingestellt ist. Allerdings bedeutet das trotzdem für den Hund Schmerzen, die er nicht einmal zuordnen kann. Zudem lässt sich auch damit ein Weglaufen des Tieres nicht sicher verhindern, insbesondere dann, wenn der "Weglaufreiz" für den Hund größer ist als der relativ niedrige Stromschlag.

Ein weiteres insbesondere zur Hundeerziehung eingesetztes Hilfsmittel ist das sogenannte Sprayhalsband. Damit können verschiedene unerwünschte Verhaltensweisen des Tiers therapiert werden, wie z. B. ein Anspringen von Menschen, Jagen anderer Tiere, Anknabbern von Gegenständen oder auch Versuche, wegzulaufen. Ein Sprayhalsband wirkt für das Tier schmerzlos dadurch, dass ein für das Tier unangenehmer Sprühstoß abgegeben wird. Dazu wird das Sprayhalsband wird mit einer ungiftigen aber für das Tier unangenehmen Flüssigkeit gefüllt. Wenn das Tier die unerwünschte Verhaltensweise an den Tag legt, kann das Sprayhalsband aktiviert und somit der Sprühstoß abgegeben werden. Das Tier wird daraufhin abgelenkt und sucht in der Regel die Nähe seines Halters. Ein sichere Abhilfe gegen das Fehlverhalten des Tieres kann aber auch das Sprayhalsband nicht bieten, insbesondere dann, wenn vergleichsweise milde Flüssigkeiten verwendet werden, an die sich das Tier unter Umständen sogar gewöhnt.

Somit besteht eine Aufgabe der vorliegenden Erfindung darin, ein verbessertes Konzept zur Einschränkung ungewollter Handlungen, insbesondere hinsichtlich eines ungewollten Weglaufens, eines Tieres, nämlich eines Hundes, bereitzustellen.

Dies wird gelöst durch das Verfahren gemäß dem unabhängigen Patentanspruch. Vorteilhafte Weiterbildungen sind Gegenstand der abhängigen Ansprüche.

Ausführungsbeispiele der vorliegenden Erfindung basieren auf der Erkenntnis, dass die Bewegungsfreiheit bzw. der Bewegungsdrang eines Lebewesens, insbesondere eines Tieres, u.a. durch Einschränkung eines Sichtfelds eingeschränkt werden kann. Wenn ein Tier nicht deutlich sehen kann, wohin es sich bewegt, dann wird es auch keinen ausgeprägten Bewegungsdrang verspüren, sondern lieber still bzw. inne halten.

Es ist eine weitere Erkenntnis, dass die Einschränkung des Sichtfelds durch ein Neigen des Kopfs des Tieres bezüglich seines Rumpfes erreicht werden kann. Unter "Neigen" soll im Nachfolgenden allgemein ein Senken, Drehen oder Heben des Kopfes verstanden werden. Insbesondere, durch ein Herabneigen bzw. -senken des Kopfes in Richtung zum Rumpf hin, kann das Sichtfeld des Tieres nach vorne hin eingeschränkt werden. Mit in Richtung Rumpf oder Brust herabgesenktem und zusätzlich in dieser Stellung fixiertem Kopf wird das Tier keinen Drang verspüren wegzulaufen.

Da das Tier im Allgemeinen seinen Kopf auf Kommando nicht freiwillig gegenüber seinem Rumpf neigen wird, um sein Sichtfeld und damit auch seinen Bewegungsdrang einzuschränken, sehen Ausführungsbeispiele der vorliegenden Erfindung dafür technische Hilfsmittel vor, die dem Tier beispielsweise mit entsprechend ausgebildeten Geschirren, o.ä., angelegt werden können.

Ausführungsbeispiele stellen eine Vorrichtung zur Einschränkung der Bewegungsfreiheit eines Lebewesens, insbesondere eines Tieres, bereit. Die Vorrichtung weist dazu eine an dem Rumpf des Lebewesens anbringbare Bewegungsbeschränkungseinrichtung auf, welche mittels eines Kopplungselements mit dem Kopf des Lebewesens koppelbar ist und dadurch mit diesem zusammenwirken kann. Dabei weist die Bewegungsbeschränkungseinrichtung Mittel zur Einschränkung der Bewegungsfreiheit des Lebewesens auf. Des Weiteren weist die Vorrichtung eine Empfangseinrichtung für ein Bewegungsbeschränkungssignal auf. Gemäß Ausführungsbeispielen ist die Bewegungsbeschränkungseinrichtung ausgebildet, um, ansprechend auf das empfangene Bewegungsbeschränkungssignal, den Kopf des Lebewesens gegenüber seinem Rumpf zu neigen. Dabei bedeutet "den Kopf zu neigen" gemäß manchen Ausführungsbeispielen auch "den Kopf zu senken", "den Kopf zu drehen" oder "den Kopf zu heben", d.h., eine Bewegung des Kopfes relativ zum Rumpf.

Dazu kann die Vorrichtung zur Einschränkung der Bewegungsfreiheit am Tier bzw. Lebewesen selbst angebracht werden. Masse und Gewicht der Vorrichtung zur Einschränkung der Bewegungsfreiheit halten sich also vorzugsweise in entsprechenden Grenzen bzw. sind derart gering, dass die am Tier angebrachte Vorrichtung das Tier (im deaktivierten Zustand der Vorrichtung) so wenig wie möglich beeinträchtigt. Die Bewegungsbeschränkungseinrichtung ist mittels eines dafür vorgesehenen Brustgeschirrs am Brustbereich des Tiers gebracht, so dass die Bewegungsbeschränkungseinrichtung bei einem vierbeinigen Tier, i.e. einem Hund, an der Unterseite des Rumpfes in einem Bereich zwischen den Vorder- und Hinterbeinen, vorzugsweise am Brustkorb, angebracht werden kann. Zur Befestigung der Bewegungsbeschränkungseinrichtung am Rumpf können entweder speziell dafür vorgesehene Haltevorrichtungen, aber auch herkömmliche und überall erhältliche Brustgeschirre verwendet werden.

Die Bewegungsbeschränkungseinrichtung und/oder das damit gekoppelte Kopplungselement kann mittels eines Aktuators angetrieben werden. Ein Aktuator, der auch als Aktor bezeichnet wird, kann das vermittels der Empfangseinrichtung empfangene Bewegungsbeschränkungssignal in eine mechanische Bewegung zumindest von einzelnen Teilen der Bewegungsbeschränkungseinrichtung umsetzen. Das bedeutet, dass gemäß Ausführungsbeispielen der Aktuator ausgebildet ist, um das empfangene Bewegungsbeschränkungssignal mittels des Kopplungselements zwischen der Bewegungsbeschränkungseinrichtung und dem Kopf in eine mechanische Bewegung umzusetzen, durch welche eine Kraft auf den Kopf des Tieres ausgeübt wird, um den Kopf des Tieres gegenüber dessen Rumpf zu neigen. Je nach eingesetztem Kopplungselement zur Kraftübertragung zwischen der Bewegungsbeschränkungseinrichtung und Kopf ist prinzipiell eine Vielzahl von Aktuatorprinzipien vorstellbar.

Gemäß manchen Ausführungsbeispielen der Vorrichtung zur Einschränkung der Bewegungsfreiheit weist die Bewegungsbeschränkungseinrichtung als Aktuator einen Elektromotor auf, welcher in einem Gehäuse der Bewegungsbeschränkungseinrichtung untergebracht sein kann. Elektromotoren sind in zahlreichen Größen und Ausgestaltungen am Markt verfügbar. Sie können unkompliziert mit Batterien und/oder wieder aufladbaren Akkumulatoren (Akkus) betrieben werden, was eine relativ einfache Handhabung der Vorrichtung zur Einschränkung der Bewegungsfreiheit und außerdem deren nahezu uneingeschränkte Mobilität bzw. Tragbarkeit zur Folge hat.

Gemäß manchen Ausführungsbeispielen ist die Bewegungsbeschränkungseinrichtung ausgebildet, um ansprechend auf das empfangene Bewegungsbeschränkungssignal den Kopf des Tieres vermittels des Aktuators und des Kopplungselements in Richtung des Rumpfs des Tieres bzw. seiner Brust zu ziehen, um dadurch den Kopf nach unten zu neigen und somit das Sichtfeld des Tieres nach vorne einzuschränken. Prinzipiell sind mit der Bewegungsbeschränkungseinrichtung auch andere Kopfneigungen möglich, beispielsweise zur Seite. Wenn das Tier durch entsprechende Neigung des Kopfes gezwungen wird nach unten zu sehen, kann es davon abgehalten werden, unkontrolliert wegzulaufen. Der Aktuator der Bewegungsbeschränkungseinrichtung, beispielsweise ein Elektromotor, kann dazu beispielsweise mit einer elektromotorisch angetriebenen Seilwinde versehen werden, um, ansprechend auf das empfangene Bewegungsbeschränkungssignal, ein Seil als Kopplungselement zwischen Bewegungsbeschränkungseinrichtung und Kopf, bzw. einem daran angebrachten Kopfgeschirr, auf eine Trommel der Seilwinde aufzurollen, um dadurch aktiv den Kopf des Tieres in Richtung seines Rumpfes zu ziehen. Auch (elektro-) motorisch angetriebene Seilwinden sind gängige Bauteile, die in nahezu sämtlichen Größen und Ausführungen frei am Markt erhältlich sind und somit eine kostengünstige Realisierung der Bewegungsbeschränkungseinrichtung erlauben.

Selbstverständlich sollte der Aktuator bzw. dessen Wirkprinzip an das zwischen der Bewegungsbeschränkungseinrichtung und dem Kopf des Tieres wirkende Kopplungselement angepasst werden. Obwohl bei bevorzugten Ausführungsbeispielen der Vorrichtung, die zum Beispiel zur Einschränkung der Bewegungsfreiheit von Hunden eingesetzt werden können, ein Seil bzw. ein seilartiges Element, wie z. B. ein Riemen, als Kopplungselement vorgesehen sein kann, sind selbstverständlich auch andere Ausführungsformen des Kopplungselements zwischen der Bewegungsbeschränkungseinrichtung und dem Kopf vorstellbar, die in der Lage sind, die Neigung des Kopfes zu bewirken. Zu nennen sind hier insbesondere verschiedene Ausführungsformen von Ketten oder Stangen bzw. Gestängen, die in ihrer Formgebung an die Anatomie des Lebewesens angepasst sein können. Zur Befestigung des Kopplungselements am Kopf des Tieres können z. B. entsprechende Kopfgeschirre vorgesehen sein. Bei manchen Ausführungsformen kann das Kopplungselement, wie z. B. ein Seil oder eine Stange, auch mit einem Nasenring zusammenwirken, wie es beispielsweise bei Rindern vorteilhaft sein kann.

Insbesondere um die Möglichkeit zu haben, ein mit der Vorrichtung bestücktes Tier frei laufen zu lassen, bietet es sich an, das Bewegungsbeschränkungssignal mittels der Empfangseinrichtung drahtlos zu empfangen. Die Empfangseinrichtung kann also ausgebildet sein, um das Bewegungsbeschränkungssignal drahtlos zu empfangen. Bei der Empfangseinrichtung kann es sich also beispielsweise um einen Empfänger für Funksignale oder andere drahtlose (wie z. B. optisch übertragene) Signale, handeln. Des Weiteren kann die Empfangseinrichtung gemäß Ausführungsbeispielen mit der Bewegungsbeschränkungseinrichtung in einem gemeinsamen Gehäuse integriert sein, was die tragbare Vorrichtung zur Einschränkung der Bewegungsfreiheit besonders kompakt und leicht handhabbar machen kann.

Der Empfänger kann dazu mit einer Empfangsantenne gekoppelte analoge und/oder digitale Schaltungsteile aufweisen, welche das (modulierte) Bewegungsbeschränkungssignal aus einem Übertragungsband, wie z.B. dem lizenzfreien 2.4 GHz Band, gegebenenfalls über eine Zwischenfrequenzstufe in das digitale Basisband heruntermischen, in dem eine digitale Signalverarbeitung und -auswertung stattfinden kann.

Dementsprechend sehen Ausführungsbeispiele der vorliegenden Erfindung auch eine von der Empfangseinrichtung entferntseitige Sendeeinrichtung für das Bewegungsbeschränkungssignal vor, wie zum Beispiel eine Fernbedienung, welche drahtlose Steuersignale für die Bewegungsbeschränkungseinrichtung aussenden kann. Derartige drahtlose Steuersignale können auf anwendungsspezifischen Übertragungsmechanismen beruhen. Vorzugsweise wird das Bewegungsbeschränkungssignal zwischen der Sende- und der Empfangseinrichtung jedoch gemäß eines drahtlosen Standardübertragungsverfahrens übermittelt, welches auf einem Multiplexverfahren, wie z. B. einem Zeitmultiplexverfahren (TDMA = Time Division Multiple Access), einem Frequenzmultiplexverfahren (FDMA = Frequency Division Multiple Access), einem Codemultiplexverfahren (CDMA = Code Division Multiple Access), einem Raummultiplexverfahren (SDMA = Space Division Multiple Access), oder auf Kombinationen der verschieden Multiplexverfahren basieren kann. Gemäß manchen Ausführungsbeispielen kann als Fernbedienung daher auch ein Mobilfunktelefon als Steuersignalgeber für die Vorrichtung zur Einschränkung der Bewegungsfreiheit dienen.

Das Bewegungsbeschränkungssignal als moduliertes und mittels eines Multiplexverfahrens übertragenes Funksignal auszubilden, ist insbesondere dann vorteilhaft, wenn eine Unterscheidung zwischen einer Vielzahl von lebewesen- bzw. tierspezifischen Bewegungsbeschränkungseinrichtung gewünscht ist. Davon wird in der Praxis auszugehen sein, da insbesondere in Stadtgebieten meist viele Hunde auf einmal Gassi geführt werden (z. B. in einem Stadtpark). Durch die Übertragung des Bewegungsbeschränkungssignals mittels eines Multiplexverfahrens können den unterschiedlichen Tieren, bzw. deren Bewegungsbeschränkungseinrichtungen, jeweils spezifische Signalfolgen zugeordnet werden, so dass die Bewegungsbeschränkungseinrichtungen jeweils nur auf die ihnen zugeordneten Signalfolgen reagieren. Als besonders vorteilhaft kann hier insbesondere das Codemultiplexverfahren (CDMA) gesehen werden, bei dem jeder Bewegungsbeschränkungseinrichtung für ein Tier ein spezifischer sogenannter Spreizcode zugeordnet wird. Das Codemultiplexverfahren ist ein Multiplexverfahren, das die gleichzeitige Übertragung verschiedener Nutzdatenströme auf einem gemeinsamen Frequenzbereich ermöglicht. Der gemeinsam genutzte Frequenzbereich weist dabei als wesentliche Eigenschaft eine größere Bandbreite auf, als der Nutzdatenstrom belegt. Zur Frequenzspreizung und zur Unterscheidung der verschiedenen Datenströme werden spezielle Spreizcodes eingesetzt. Beispielsweise könnte die Vorrichtung in dem lizenzfreien 2,4 GHz Band arbeiten.

Um das Lebewesen, bei dem die Vorrichtung zur Einschränkung der Bewegungsfreiheit eingesetzt wird, vor Verletzungen zu schützen, kann die Bewegungsbeschränkungseinrichtung ein kraftbegrenzendes Element aufweisen, um eine durch den Aktuator bzw. die Bewegungsbeschränkungseinrichtung auf den Kopf des Lebewesens ausgeübte maximale Kraft, insbesondere eine Zugkraft, auf das Nötigste zu begrenzen. Verschiedene Tiere benötigen unterschiedliche große Kräfte, um den Kopf des Tieres tatsächlich neigen bzw. in Richtung seines Rumpfes ziehen zu können. Für einen kleinen Hund wird dazu beispielsweise eine geringere Zugkraft benötigt werden als für ein vergleichsweise großer Hund, wie z. B. einen Schäferhund oder eine Dogge. Das gleiche gilt, wenn Ausführungsbeispiele der vorliegenden Erfindung bei Großtieren, wie z. B. Pferden, Rindern, etc., eingesetzt werden.

Es versteht sich also von selbst, dass die Bewegungsbeschränkungseinrichtung, bzw. deren Aktuator, und auch das Kopplungselement vorzugsweise auf eine Größe und Stärke des Lebewesens, bei dem Ausführungsbeispiele der Vorrichtung zur Bewegungseinschränkung eingesetzt werden sollen, angepasst werden sollten. Dies kann auf verschiedene Art und Weise erfolgen. Beispielsweise könnten dazu Federelemente und/oder Anschläge zur Anpassung der Vorrichtung auf bestimmte Tiere vorgesehen sein. So könnte das kraftbegrenzende Element ausgebildet sein, um die maximale Zugkraft der Bewegungsbeschränkungseinrichtung auf eine Größe und/oder eine Muskelkraft des Lebewesens anpassen zu können. Dazu könnte als kraftbegrenzendes Element beispielsweise eine Rutschkupplung vorgesehen sein, welche mit dem Aktuator (z. B. Elektromotor mit Seilwinde) gekoppelt wird. Eine Rutschkupplung wird im Allgemeinen zwischen zwei Wellen angeordnet. Bei Erreichen eines definierten Drehmoments trennt oder verbindet die Rutschkupplung ohne äußeren, d.h. fremden, Einfluss. So können die Wellen neben einem Gleichlauf auch mit unterschiedlicher Drehzahl laufen, bis hin zum Stillstand einer der Wellen. Prinzipiell können Rutschkupplungen dort eingesetzt werden, wo Verletzungen von Lebewesen vermieden werden sollen. Beispielsweise können Rutschkupplungen als Schutzmaßnahme eingesetzt werden, indem sie ab einer maximalen Belastung durchrutschen.

Zusätzlich oder alternativ kann die Bewegungsbeschränkungseinrichtung auch eine Steuer- oder Regeleinrichtung aufweisen, um ein Ausmaß der Kopfneigung, wie z. B. ein Herabsenken des Kopfs in Richtung des Rumpfes, zu steuern und/oder zu regeln. Die Steuer- bzw. Regeleinrichtung könnte gemäß manchen Ausführungsbeispielen derart ausgebildet sein, dass sie eine auf den Kopf ausgeübte Zugkraft stets an eine von dem Tier entgegengesetzte Kraft anpasst, so dass während des Herabsenkens des Kopfs die Zugkraft der Bewegungsbeschränkungseinrichtung größer ist als die vom Tier entgegengebrachte Kraft, und dass bei vollständig herabgesenkten Zustand des Kopfs ein Kräftegleichgewicht zwischen den beiden entgegen gerichteten Kräften vorherrscht. Soll der Kopf wieder freigegeben werden, so kann die Zugkraft entweder plötzlich aufgehoben werden oder auch langsam auf null zurück geregelt werden. Elektronische und/oder mechanische Regelungen der durch die Bewegungsbeschränkungseinrichtung ausgeübten Zugkraft können besonders schonend und angenehm für das Tier zur Einschränkung dessen Bewegungsfreiheit eingesetzt werden.

Selbstverständlich sollen Ausführungsbeispiele neben der Einschränkung der Bewegungsfreiheit auch die Wiederherstellung bzw. Freigabe der Bewegungsfreiheit ermöglichen. Dazu ist die Empfangseinrichtung ausgebildet, um zusätzlich zu dem Bewegungsbeschränkungssignal auch ein Bewegungsfreigabesignal zu empfangen. Die Bewegungsbeschränkungseinrichtung ist dazu ausgebildet, um ansprechend auf das empfangene Bewegungsfreigabesignal, welches - wie das Bewegungsbeschränkungssignal - ein entsprechend moduliertes Funksignal sein kann, den durch die Bewegungsbeschränkungseinrichtung gegenüber dem Rumpf geneigten und damit in seiner Bewegung eingeschränkten Kopf des Tieres wieder freizugeben. Dies kann, wie es oben bereits angedeutet wurde, beispielsweise durch sanftes Nachlassen der Zugkraft erfolgen. Bei manchen Ausführungsbeispielen kann dazu die elektromotorisch betriebene Seilwinde entriegelt werden, so dass sich das Seil (Kopplungselement) wieder abrollen kann.

Des Weiteren kann es vorteilhaft sein, ein Tier abhängig von einer Entfernung zwischen der Bewegungsbeschränkungseinrichtung und einer Fernbedienung zum Senden des Bewegungsbeschränkungssignals in seiner Bewegungsfreiheit einzuschränken. Um dies zu ermöglichen, können Ausführungsbeispiele der Vorrichtung zusätzlich eine Einrichtung zur Ermittlung der Entfernung zwischen der Bewegungsbeschränkungseinrichtung und der Fernbedienung zum Senden des Bewegungssignals umfassen. Die Einrichtung zur Ermittlung der Entfernung kann zusätzlich ausgebildet sein, um einem die Fernbedienung betätigenden Halter des Tieres die Entfernung zum Tier und/oder eine Richtung, in der sich das Tier befindet, anzuzeigen, um dem Halter somit eine Ortung des Tieres zu ermöglichen. Die Entfernungsermittlung könnte beispielsweise mittels einer Auswertung von Signallaufzeiten und/oder Feldstärkemessungen bezüglich des Bewegungsbeschränkungssignals und/oder des Bewegungsfreigabesignals erfolgen. Des Weiteren könnte zur Positionsbestimmung auch eine entsprechende Navigationshardware, wie z. B. GPS-Empfänger (GPS = Global Positioning System), in der Bewegungsbeschränkungseinrichtung vorgesehen sein.

Um zu verhindern, dass sich ein Tier um mehr als einen vorbestimmten Wert, bzw. um mehr als eine maximale Entfernung, von seinem Halter oder einem anderen vordefinierbaren Ort entfernt, kann gemäß manchen Ausführungsbeispielen das Bewegungsbeschränkungssignal ausgelöst werden, wenn eine ermittelte Entfernung zwischen dem Aufenthaltsort des Tieres und dem des Halters bzw. dem anderen vordefinierbaren Ort größer wird, als eine vorgebbare Maximalentfernung. Die Einrichtung zur Ermittlung der Entfernung kann also ausgebildet sein, um, ansprechend auf eine ermittelte Entfernung zwischen der Bewegungsbeschränkungseinrichtung und der Fernbedienung, welche größer als die vorgebbare Maximalentfernung ist, das Bewegungsbeschränkungssignal auszulösen. Somit ermöglichen Ausführungsbeispiele quasi einen vorgebbaren Aufenthaltsraum des Tieres, welcher beispielsweise durch die vorgebbare Maximalentfernung und die Position der Fernbedienung definiert wird. Versucht nun das Tier, diesen Aufenthaltsraum bzw. Bewegungsspielraum zu verlassen, wird das Bewegungsbeschränkungssignal ausgelöst, woraufhin mittels der Bewegungsbeschränkungseinrichtung der Kopf des Tieres gegenüber dem Rumpf geneigt werden kann, um das Tier zum Stehen zu bringen.

Weitere Ausführungsbeispiele umfassen nicht nur die bisher beschriebene Vorrichtung zur Einschränkung der Bewegungsfreiheit, sondern vielmehr auch ein ganzes Set zur Einschränkung der Bewegungsfreiheit eines Lebewesens, wobei das Set eine Vorrichtung zur Einschränkung der Bewegungsfreiheit gemäß Ausführungsbeispielen der vorliegenden Erfindung aufweist. Des Weiteren umfasst das Set ein an dem Kopf des Tieres anbringbares Kopfgeschirr mit einer Kopplungseinrichtung für das Kopplungselement. Außerdem weist das Set auch eine Fernbedienung zum Auslösen des Bewegungsbeschränkungssignals bzw. des Bewegungsfreigabesignals auf.

Gemäß Anspruch 1 ist ein Verfahren zur Einschränkung einer Bewegungsfreiheit eines Hundes vorgesehen. Dabei umfasst das Verfahren einen Schritt des Übertragens eines Bewegungsbeschränkungssignals an einen dafür vorgesehenen Empfänger einer am Rumpf des Tieres angebrachten Bewegungsbeschränkungseinrichtung, welche mittels eines Kopplungselements mit den Kopf des Tieres gekoppelt ist. Des Weiteren umfasst das Verfahren einen Schritt des Neigens, ansprechend auf das Bewegungssignal, des Kopfes des Tieres gegenüber seinem Rumpf vermittels der Bewegungsbeschränkungseinrichtung und des Kopplungselements.

Ausführungsbeispiele der vorliegenden Erfindung ermöglichen insgesamt also gegenüber bisher aus dem Stand der Technik bekannten Vorrichtungen und Verfahren ein humaneres und gleichzeitig in seiner Effektivität verbessertes Konzept, um ein Lebewesen, insbesondere ein Tier, auf Kommando, nämlich dem Bewegungsbeschränkungssignal, in seiner Bewegung einzuschränken, es also beispielsweise zum Stehen zu bringen oder am Fortlaufen zu hindern. Es ist sogar vorstellbar, das Tier mittels der Fernbedienung nicht nur auf Kommando oder basierend auf einem vorgebbaren Bewegungsradius zum Stehen zu bringen, sondern ihm damit und der Bewegungsbeschränkungseinrichtung sogar weiterführende Bewegungskommandos, wie z. B. "links", "rechts", etc., zu vermitteln.

Einige Ausführungsbeispiele der vorliegenden Erfindung werden nachfolgend bezugnehmend auf die beiliegenden Figuren näher erläutert. Es zeigen:
- Fig. 1: ein schematisches Blockschaltbild einer Vorrichtung zur Einschränkung einer Bewegungsfreiheit eines Lebewesens gemäß einem Ausführungsbeispiel;

- Fig. 2: eine mögliche Ausführungsform der Vorrichtung zur Einschränkung der Bewegungsfreiheit gemäß Figur 1;
- Fig. 3: eine schematische Darstellung eines Hundes, der eine Vorrichtung zur Einschränkung seiner Bewegungsfreiheit gemäß einem Ausführungsbeispiel trägt;
- Fig. 4: eine schematische Darstellung des Hundes gemäß Figur 3 mit durch die Vorrichtung zur Einschränkung der Bewegungsfreiheit eingeschränkter Bewegungsfreiheit; und
- Fig. 5: ein schematisches Ablaufdiagramm eines Verfahrens zur Einschränkung einer Bewegungsfreiheit eines Lebewesens gemäß einem Ausführungsbeispiel der vorliegenden Erfindung.

Im Rahmen der vorliegenden Beschreibung werden zusammenfassende Bezugszeichen für Objekte, Strukturen und andere Komponenten verwendet, wenn die betreffende Komponente an sich oder mehrere entsprechende Komponenten innerhalb eines Ausführungsbeispiels oder innerhalb mehrerer Ausführungsbeispiele beschrieben werden. Passagen der Beschreibung, die sich auf eine Komponente beziehen, sind daher auch auf andere Komponenten in anderen Ausführungsbeispielen übertragbar, soweit dies nicht explizit ausgeschlossen ist oder sich dies aus dem Zusammenhang ergibt. Werden einzelne Komponenten bezeichnet, werden individuelle Bezugszeichen verwendet, die auf den entsprechenden zusammenfassenden Bezugszeichen basieren können. Bei der nachfolgenden Beschreibung von Ausführungsformen bezeichnen daher gleiche Bezugszeichen gleiche oder vergleichbare Komponenten.

Komponenten, die mehrfach in einem Ausführungsbeispiel oder in unterschiedlichen Ausführungsbeispielen auftreten, können hierbei bezüglich einiger ihrer technischen Parameter identisch und/oder unterschiedlich ausgeführt oder implementiert werden. Es ist so beispielsweise möglich, dass mehrere Komponenten innerhalb eines Ausführungsbeispiels bezüglich eines Parameters identisch, bezüglich eines anderen Parameters jedoch unterschiedlich ausgeführt sein können.

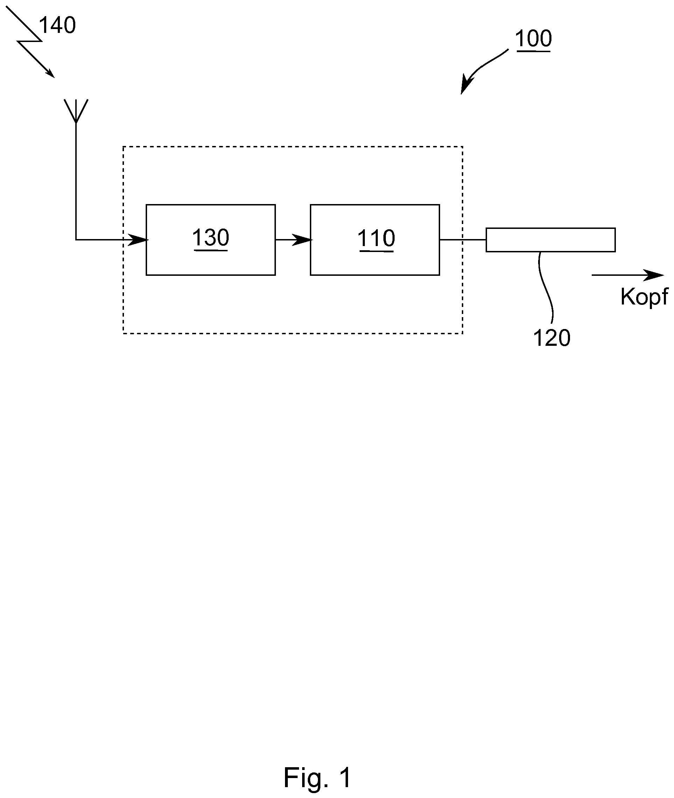

Die Fig. 1 zeigt eine schematische Darstellung eines Blockdiagramms einer Vorrichtung 100 zur Einschränkung einer Bewegungsfreiheit eines Lebewesens, welche im Nachfolgenden auch als Bewegungseinschränkungsvorrichtung 100 bezeichnet wird.

Die Bewegungseinschränkungsvorrichtung 100 weist eine Bewegungsbeschränkungseinrichtung 110 auf, welche an dem Rumpf des Lebewesens, z. B. eines Tieres, anbringbar ist. Die Bewegungsbeschränkungseinrichtung 110 ist ferner mittels eines Kopplungselements 120 mit dem Kopf des Lebewesens direkt oder indirekt koppelbar. Der Kopf des Lebewesens kann also mittels des Kopplungselements 120 mit der Vorrichtung 100 bzw. deren Bewegungsbeschränkungseinrichtung 110 gekoppelt werden. Ferner umfasst die Vorrichtung 100 zur Einschränkung der Bewegungsfreiheit eine Empfangseinrichtung 130, um ein Bewegungsbeschränkungssignal 140 empfangen zu können. Die Vorrichtung 100 bzw. die Bewegungsbeschränkungseinrichtung 110 ist ausgebildet, um, ansprechend auf das empfangene Bewegungsbeschränkungssignal 140, den Kopf des Lebewesens vermittels des Kopplungselements 120 gegenüber dem Rumpf des Lebewesens zu neigen.

Das Neigen des Kopfes basiert also auf einem Zusammenwirken des durch die Empfangseinrichtung 130 empfangenen Bewegungsbeschränkungssignals 140, der Bewegungsbeschränkungseinrichtung 110 und dem zwischen der Bewegungsbeschränkungseinrichtung 110 und dem Kopf des Lebewesens angeordneten Kopplungselements 120. Dazu kann das empfangene Bewegungsbeschränkungssignal 140 beispielsweise auf einen in Fig. 1 nicht dargestellten elektromechanischen Aktuator der Bewegungsbeschränkungseinrichtung 110 einwirken, der wiederum das Kopplungselement 120 derart betätigt, so dass mit diesem eine Kraft auf den Kopf des Lebewesens übertragen wird. Diese auf den Kopf wirkende Kraft zwingt das Lebewesen seinen Kopf gegenüber seinem Rumpf zu neigen. Obwohl prinzipiell Kopfneigungen in verschiedene Richtungen denkbar sind, betreffen manche Ausführungsbeispiele der vorliegenden Erfindung eine Neigung des Kopfes hin zum Rumpf bzw. in Richtung zur Brust des Tieres hin. Das bedeutet also, dass bei manchen Ausführungsbeispielen die aktuatorisch angetriebene Bewegungsbeschränkungseinrichtung 110 derart auf das Kopplungselement 120 einwirken kann, dass vermittels des Kopplungselements 120 eine Zugkraft auf den Kopf in Richtung Rumpf bzw. Brust des Lebewesens ausgeübt wird.

Die Bewegungseinschränkungsvorrichtung 100 mit ihren dargestellten Komponenten ist gemäß bevorzugten Ausführungsbeispielen als für das Lebewesen tragbare Vorrichtung ausgebildet. Die Vorrichtung 100 kann also am Körper des Lebewesens befestigt werden, um dieses während seiner Bewegung auf Kommando (= Bewegungsbeschränkungssignal 140) durch Ausübung der (Zug-)Kraft auf den Kopf in seiner Bewegungsfreiheit einzuschränken. Daher ist es vorteilhaft, wenn das Bewegungsbeschränkungssignal 140 drahtlos, beispielsweise mittels Funkübertragung, von einem in Fig. 1 nicht dargestellten Sender zu der Empfangseinrichtung 130 übertragen wird. Die Empfangseinrichtung 130 kann also als mobiler bzw. tragbarer Empfänger ausgebildet sein, um das Bewegungsbeschränkungssignal 140 drahtlos zu empfangen.

Wie es weiter oben bereits erläutert wurde, bieten sich für eine drahtlose Übertragungstechnik eine Vielzahl von unterschiedlichen Funktechniken an, deren Auswahl letztendlich von diversen Faktoren, wie z. B. Störungssicherheit, Geräteanzahl, verfügbares Frequenzband, etc., abhängt. Als besonders vielseitiges Übertragungsverfahren soll an dieser Stelle ohne Beschränkung der Allgemeinheit und lediglich exemplarisch CDMA genannt werden, so dass die Empfangseinrichtung 130 gemäß manchen Ausführungsbeispielen ausgebildet sein kann um als Bewegungsbeschränkungssignal ein moduliertes Frequenzspreizsignal mit einem für das Lebewesen bzw. die Vorrichtung 100 spezifischen Spreizcode zu empfangen.

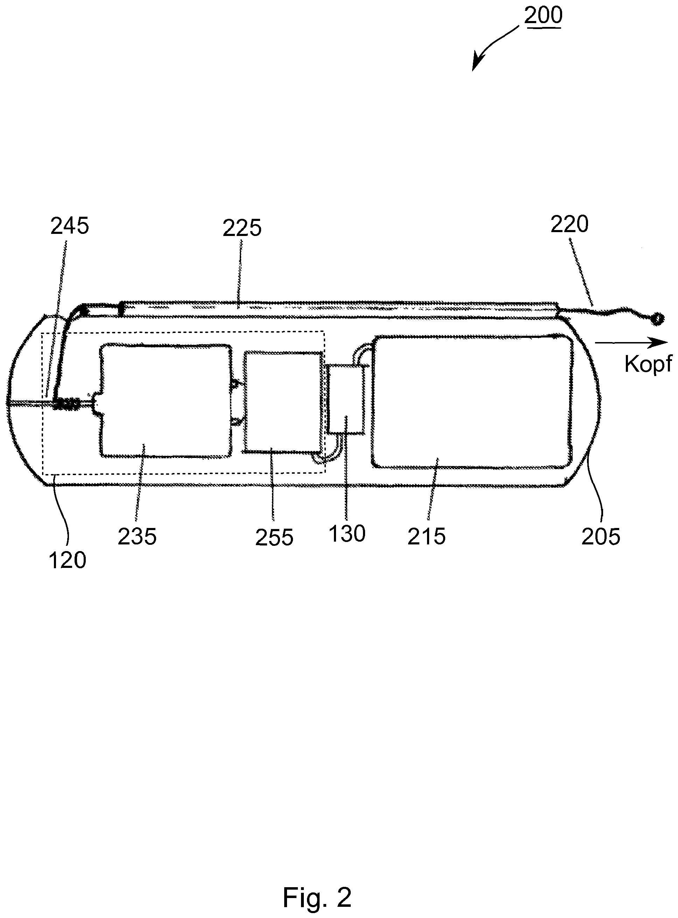

Nachdem anhand der Prinzip-Skizze der Fig. 1 der allgemeine Aufbau und die allgemeine Funktionsweise der Bewegungseinschränkungsvorrichtung 100 erläutert wurde, soll im Nachfolgenden anhand der Fig. 2 bis 4 ein mögliches Ausführungsbeispiel 200 der Bewegungseinschränkungsvorrichtung 100 beschrieben werden. Dabei versteht es sich allerdings von selbst, dass es sich bei dem beschriebenen Ausführungsbeispiel lediglich um eine von vielen möglichen Realisierungen der Erfindung handelt und dieses daher nicht einschränkend zu verstehen sein soll.

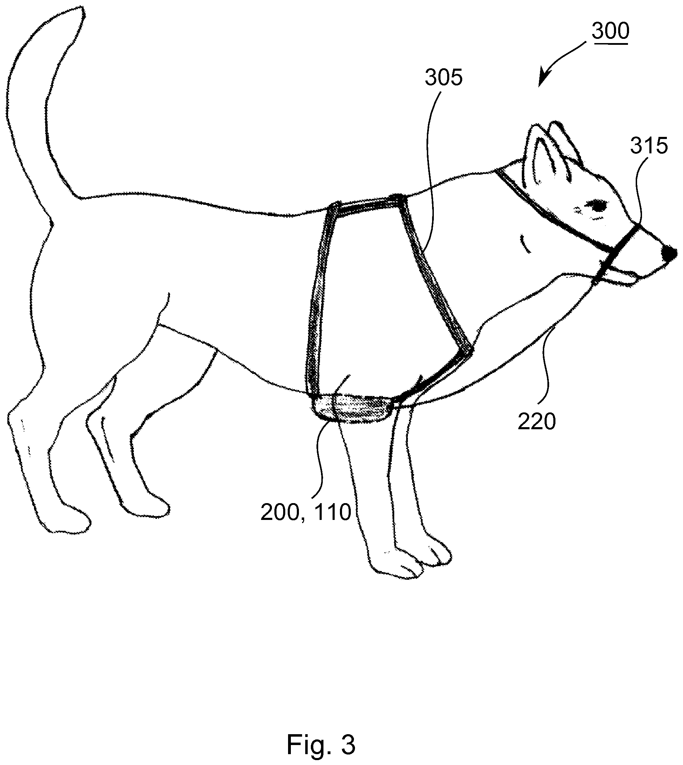

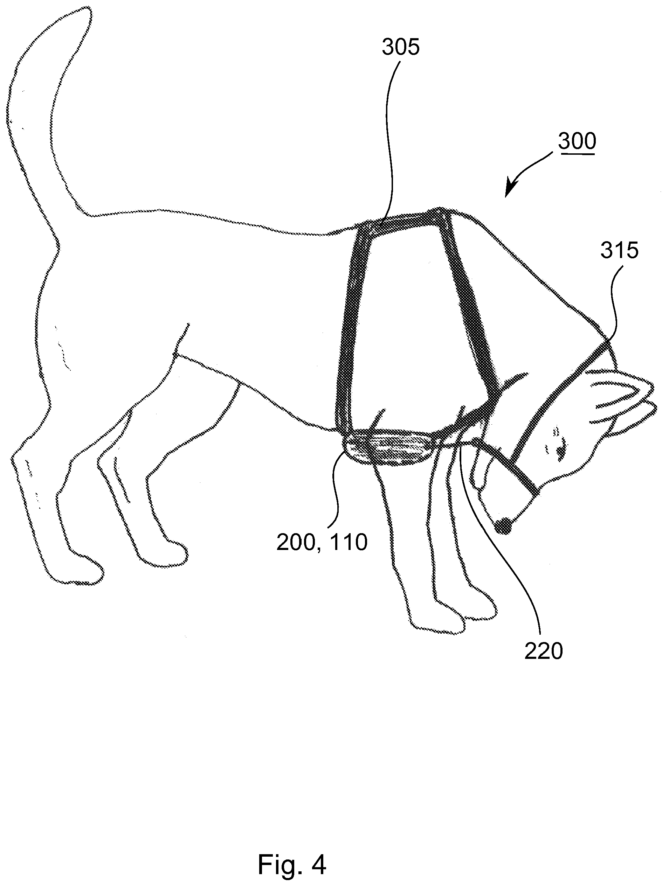

Die Fig. 2 zeigt ein Ausführungsbeispiel einer Vorrichtung 200 zur Einschränkung einer Bewegungsfreiheit eines Tieres, insbesondere eines Hundes. Wie es in den Fig. 3 und 4 jeweils schematisch dargestellt ist, kann die Vorrichtung 200 beispielsweise mittels eines Brustgeschirrs 305 in einem Brustbereich des Hundes 300 angebracht werden. Die Bewegungseinschränkung des Vorrichtung 200 ist demnach großen- und gewichtsmäßig jeweils möglichst gering bzw. klein ausgebildet, um dem Hund 300 das Tragen der Vorrichtung 200 so angenehm und wenig belastend wie möglich zu machen.

Gemäß dem in Fig. 2 dargestellten Ausführungsbeispiel weist die Bewegungseinschränkungsvorrichtung 200 ein Gehäuse 205 auf, indem die Bewegungsbeschränkungseinrichtung 110 (= Mittel zur Einschränkung der Bewegung), die Empfangseinrichtung 130, sowie ein Energiespeicher 215 angeordnet sind. Die Bewegungsbeschränkungseinrichtung 110 ist bei dem in Fig. 2 gezeigten Ausführungsbeispiel mittels eines Seils 220 als Kopplungselement 120 mit dem Kopf des Hundes 300 verbindbar bzw. koppelbar. Kopfseitig kann das Seil 220 beispielsweise mittels eines Kopfgeschirrs 315 mit dem Kopf des Hundes 300 verbunden werden. Dazu kann das Seil 220 beispielsweise unterhalb der Schnauze des Tieres 300 an dem Kopfgeschirr 315 befestigt werden (siehe Fig. 3, 4). Zur besseren Führung des Seils 220 kann dieses in einem an dem Vorrichtungsgehäuse 205 entlanglaufenden Führungsgehäuse 225 geführt. Bei dem Führungsgehäuse 225 kann es sich beispielsweise um ein Rohr oder eine zumindest abschnittsweise rohrförmige Führung handeln.

Zur Ausübung einer Kraft auf den Kopf des Hundes kann das Seil 220 auf eine Seilwinde 245 auf- bzw. abgewickelt werden, welche mittels eines als Aktuator wirkenden Elektromotors 235 angetrieben wird. Die Bewegungsbeschränkungseinrichtung 110 weist also eine elektromotorisch angetriebene Seilwinde 245 auf, um, ansprechend auf das vermittels der Empfangseinrichtung 130 empfangene Bewegungsbeschränkungssignal 140, das Seil 220 auf eine Trommel oder eine Stange der Seilwinde 245 aufzurollen und dadurch den Kopf des Hundes 300 in Richtung seines Rumpfes zu ziehen, wie es schematisch in der Fig. 4 gezeigt ist. Während die Fig. 4 den Hund 300 mit in Richtung seiner Brust geneigtem Kopf darstellt (das Seil 220 ist hier auf die Seilwinde 245 aufgewickelt), zeigt die Fig. 3 den Hund 300 mit normaler bzw. uneingeschränkter Bewegungsfreiheit (das Seil 220 ist hier von der Seilwinde 245 abgewickelt).

Die Bewegungseinschränkungsvorrichtung 200 erhält ihre Energie aus dem Energiespeicher 215, der in dem gezeigten Ausführungsbeispiel als Batterie oder wieder aufladbarer Akkumulator (kurz: Akku) ausgebildet ist, um den Empfänger 130 und die Bewegungsbeschränkungseinrichtung 110 inkl. Elektromotor 235 mit elektrischer Energie, d.h. Strom und/oder Spannung, zu versorgen. Zwischen den Empfänger 130 für das Bewegungsbeschränkungssignal 140 und dem Elektromotor 235 kann eine Regel- bzw. Steuereinrichtung 255 beispielsweise in Form eines sogenannten Fahrt- oder Fahrtenreglers geschaltet sein. Die Regel- bzw. Steuereinrichtung 255 regelt bzw. steuert den Elektromotor 235 ansprechend auf von der Empfangseinrichtung 130 empfangene Signale. Als Eingangssignal erhält der Fahrtregler 255 z. B. Impulse vom Empfänger 130, die er beispielsweise zu einem pulsweitenmoderierten (PWM) Signal für den Elektromotor 235 umsetzen kann. In einer vergleichsweise einfachen Ausgestaltung kann die Regel- bzw. Steuereinrichtung 255 lediglich zwei verschiedene Drehbewegungen des Elektromotors 235 hervorrufen. Eine erste, um das Seil 220, ansprechend auf das Bewegungsbeschränkungssignal 140, auf die Seilwinde 245 aufzurollen und damit eine Zugkraft auf den Kopf des Hundes 300 zur Bewegungseinschränkung hervorzurufen (siehe Fig. 4). Ansprechend auf ein zweites Signal, ein Bewegungsfreigabesignal, kann eine Drehrichtung und eine Drehzahl des Elektromotors 235 eingestellt werden, um das Seil 220 wieder von der Trommel der Seilwinde 245 abzurollen und damit dem Hund 300 wieder eine uneingeschränkte Bewegung zu ermöglichen (siehe Fig. 3). Dazu kann die Empfangseinrichtung 130 ausgebildet sein, um zusätzlich zu dem Bewegungsbeschränkungssignal 140 auch das Bewegungsfreigabesignal zu empfangen. Die Bewegungsbeschränkungseinrichtung 110 ist demgemäß also ausgebildet, um ansprechend auf das Bewegungsfreigabesignal, den in Richtung Rumpf gezogenen und damit in seiner Bewegung eingeschränkten Kopf des Hundes 300 wieder (nach oben) freizugeben.

Gemäß anderen Ausführungsbeispielen kann die Regel- bzw. Steuereinrichtung 255 auch komplexer ausgestaltet sein. So könnte diese beispielsweise auch ausgebildet sein, um ein Ausmaß des Herabsenkens des Kopfes des Hundes 300 in Richtung seines Rumpfes zu steuern und/oder zu regeln, d.h. tatsächlich einen Soll-Ist Vergleich durchzuführen. Dabei kann unter den Begriff "Ausmaß" z. B. ein Ausmaß eines Kopfneigungswinkels nach unten verstanden werden. Der Kopfneigungswinkel ergibt sich indirekt daraus, wie weit das Seil 220 auf die Trommel der Seilwinde 245 aufgerollt wird. Zusätzlich oder alternativ kann unter dem Begriff "Ausmaß" auch eine Kraft verstanden werden, die das Seil 220 bzw. den Kopf des Hundes 300 in Richtung seines Rumpfes zieht. In anderen Worten, kann die Regel- bzw. Steuereinrichtung 255 auch zur Steuerung bzw. Regelung einer Drehzahl und/oder eines Drehmoments des Elektromotors 235 eingesetzt werden, um beispielsweise die durch das Seil 220 ausgeübte Kraft auf eine Größe und/oder Muskelkraft des Hundes 300 (oder eines anderen Tieres) anpassen zu können.

Des Weiteren kann es vorteilhaft sein, Mittel zur Begrenzung der auf den Kopf des Hundes 300 bzw. Tieres ausgeübten Kraft bereitzustellen. Solche Mittel können beispielsweise durch die Steuer- bzw. Regeleinrichtung 255 vorgesehen sein, welche mittels eines Regelkreises eine auf das Tier 300 ausgeübte Kraft auf ein erforderliches Maß regeln kann, so dass die Kraft stets ausreichend groß und gleichzeitig klein genug ist, um das Tier nicht zu verletzen. Bei anderen Ausführungsbeispielen könnte eine Kraftbegrenzung aber auch durch ein anderes, z. B. mechanisches, kraftbegrenzendes Element realisiert werden. So könnte beispielsweise die maximal auf das Tier ausgeübte Kraft mittels einer Rutschkupplung auf eine Größe und/oder eine Muskelkraft des Tieres 300 angepasst werden, um das Tier nicht unnötig zu verletzen. Insgesamt kann bei bevorzugten Ausführungsbeispielen die Bewegungsbeschränkungseinrichtung 110 also ein kraftbegrenzendes Element (zum Beispiel elektronische Regelung oder eine mechanische Kupplung) aufweisen, um eine durch den elektromechanischen Aktuator 235 und/oder die Betätigungseinrichtung 110 im Allgemeinen auf den Kopf des Tieres ausgeübte maximale Kraft zu begrenzen.

Wie es weiter oben bereits erläutert wurde, können Ausführungsbeispiele der vorliegenden Erfindung um weitere nützliche Funktionen erweitert werden, wie z. B. eine Entfernungsbestimmung zwischen der Bewegungseinschränkungsvorrichtung 200 und einer entferntseitigen Fernbedienung zum Senden der Bewegungsbeschränkung- und Bewegungsfreigabesignale. Eine ermittelte Entfernung kann dann wiederum eingesetzt werden, um gegebenenfalls ein Bewegungsbeschränkungssignal oder ein Bewegungsfreigabesignal auszulösen. Bewegt sich der Hund 300 beispielsweise aus einem maximal zulässigen Radius um die Fernbedienung heraus, so könnte das Bewegungsbeschränkungssignal 140 automatisch ausgelöst werden, um den Hund 300 zum Stehen zu bringen. Erst wenn die Entfernung zwischen Halter bzw. Fernbedienung und Hund 300 wieder klein genug ist, wird das Bewegungsfreigabesignal ausgelöst, um den Hund 300 wieder frei laufen zu lassen.

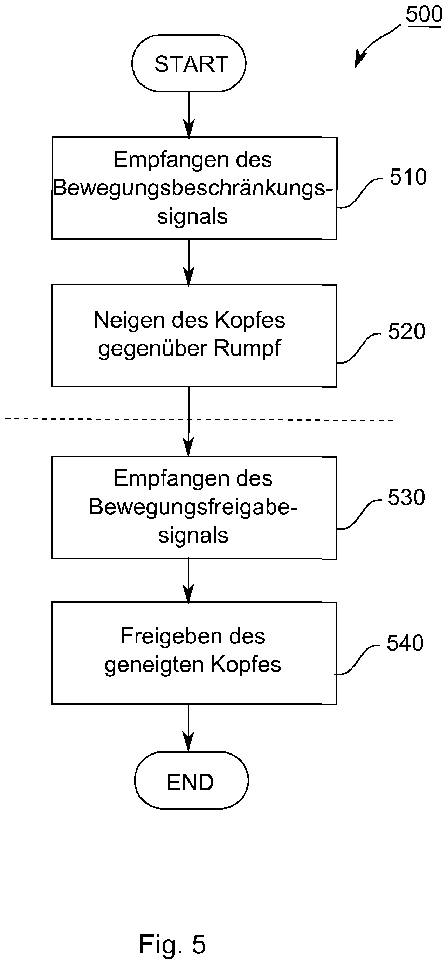

Das hier vorgestellte Konzept wird nun anhand der Fig. 5 noch einmal zusammengefasst.

Die Fig. 5 zeigt schematisch ein Ablaufdiagramm eines Verfahrens 500 zur Einschränkung einer Bewegungsfreiheit eines prinzipiell beliebigen Lebewesens, welches aber bevorzugt aus der Gruppe der Säugetiere und noch weiter bevorzugt aus der Gruppe der vom Menschen gehaltenen Haus- und/oder Nutztiere stammt. Das Verfahren 500 umfasst einen Schritt 510 des Übermittelns des Bewegungsbeschränkungssignals 140 von einer Fernbedienung an einen Empfänger 130 einer am Rumpf des Lebewesens 300 angebrachten Bewegungsbeschränkungseinrichtung 110, welche mittels eines Kopplungselements 120 mit dem Kopf des Lebewesens 300 gekoppelt ist. Ansprechend auf das Bewegungsbeschränkungssignal 140 wird der Kopf des Lebewesens 300 in einem Schritt 520 gegenüber seinem Rumpf vermittels der Bewegungsbeschränkungseinrichtung 110 und des Kopplungselements 120 gedreht oder geneigt, insbesondere gesenkt.

Um die ursprüngliche uneingeschränkte Bewegungsfreiheit des Lebewesens wieder herzustellen, kann in einem weiteren Schritt 530 ein Bewegungsfreigabesignal von der Fernbedienung an den Empfänger 130 übermittelt werden. Ansprechend auf das empfangene Bewegungsfreigabesignal kann die auf den Kopf des Lebewesens vermittels der Bewegungsbeschränkungseinrichtung 110 und des Kopplungselements 120 wirkende Kraft wieder freigegeben werden, um die Bewegungsfreiheit des Lebewesens wieder herzustellen.

Je nach bestimmten Implementierungsanforderungen können Ausführungsbeispiele der vorliegenden Erfindung auch mithilfe von entsprechender Software implementiert sein. Die Implementierung kann unter Verwendung eines digitalen Speichermediums, beispielsweise einer Floppy-Disk, einer DVD, einer Blue-Ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einer programmierbaren Hardwarekomponente derart zusammenwirken können oder zusammenwirken, dass das ein Verfahren zur Bewegungseinschränkung durchgeführt wird.

Eine programmierbare Hardwarekomponente kann durch einen Prozessor, ein Computerprozessor (CPU = Central Processing Unit), einen Computer, ein Computersystem, einen anwendungsspezifischen integrierten Schaltkreis (ASIC = Application-Specific Integrated Circuit), einen integrierten Schaltkreis (IC = Integrated Circuit), ein Ein-Chip-System (SOC = System on Chip), ein programmierbares Logikelement oder ein feldprogrammierbares Gatterarray mit einem Mikroprozessor (FPGA = Field Programmable Gate Array) gebildet sein.

Das digitale Speichermedium kann daher maschinen- oder computerlesbar sein. Manche Ausführungsbeispiele umfassen also einen Datenträger, der elektronisch lesbare Steuersignale aufweist, die in der Lage sind, mit einem programmierbaren Computersystem oder einer programmierbaren Hardwarekomponente derart zusammenzuwirken, dass eines der hierin beschriebenen Verfahren, oder zumindest einige Schritte davon, durchgeführt wird. Ein Ausführungsbeispiel ist somit ein Datenträger (oder ein digitales Speichermedium oder ein computerlesbares Medium), auf dem das Programm zum Durchführen eines der hierin beschriebenen Verfahren aufgezeichnet ist.

Allgemein können Ausführungsbeispiele der vorliegenden Erfindung als Programm, Firmware, Computerprogramm oder Computerprogrammprodukt mit einem Programmcode oder als Daten implementiert sein, wobei der Programmcode oder die Daten dahin gehend wirksam ist bzw. sind, eines der Verfahren durchzuführen, wenn das Programm auf einem Prozessor oder einer programmierbaren Hardwarekomponente abläuft. Der Programmcode oder die Daten können bzw. können beispielsweise auch auf einem maschinenlesbaren Träger oder Datenträger gespeichert sein. Der Programmcode oder die Daten können unter anderem als Quellcode, Maschinencode oder Bytecode sowie als anderer Zwischencode vorliegen.

Ein weiteres Ausführungsbeispiel ist ferner ein Datenstrom, eine Signalfolge oder eine Sequenz von Signalen, der bzw. die das Programm zum Durchführen eines der hierin beschriebenen Verfahren darstellt bzw. darstellen. Der Datenstrom, die Signalfolge oder die Sequenz von Signalen kann bzw. können beispielsweise dahin gehend konfiguriert sein, um über eine Datenkommunikationsverbindung, beispielsweise über das Internet oder ein anderes (drahtloses) Netzwerk, transferiert zu werden. Ausführungsbeispiele sind so auch Daten repräsentierende Signalfolgen, die für eine Übersendung über ein Netzwerk oder eine Datenkommunikationsverbindung geeignet sind, wobei die Daten das Programm darstellen.

Ein Programm gemäß einem Ausführungsbeispiel kann eines der Verfahren während seiner Durchführung beispielsweise dadurch umsetzen, dass dieses Speicherstellen ausliest oder in diese ein Datum oder mehrere Daten hinein schreibt, wodurch gegebenenfalls Schaltvorgänge oder andere Vorgänge in Transistorstrukturen, in Verstärkerstrukturen oder in anderen elektrischen, optischen, magnetischen oder nach einem anderen Funktionsprinzip arbeitenden Bauteile hervorgerufen werden. Entsprechend können durch ein Auslesen einer Speicherstelle Daten, Werte, Sensorwerte oder andere Informationen von einem Programm erfasst, bestimmt oder gemessen werden. Ein Programm kann daher durch ein Auslesen von einer oder mehreren Speicherstellen Größen, Werte, Messgrößen und andere Informationen erfassen, bestimmen oder messen, sowie durch ein Schreiben in eine oder mehrere Speicherstellen eine Aktion bewirken, veranlassen oder durchführen sowie andere Geräte, Maschinen und Komponenten ansteuern.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

### Bezugszeichenliste

- 100: Vorrichtung zur Einschränkung einer Bewegungsfreiheit gemäß einem ersten Ausführungsbeispiel
- 110: Bewegungsbeschränkungseinrichtung
- 120: Kopplungselement
- 130: Empfangseinrichtung
- 140: Bewegungsbeschränkungssignal
- 200: Vorrichtung zur Einschränkung einer Bewegungsfreiheit gemäß einem weiteren Ausführungsbeispiel
- 205: Gehäuse
- 215: Energiespeicher, Akku
- 220: Kopplungselement, Seil
- 225: Führungsröhre
- 235: Elektromotor
- 245: elektromotorisch betriebene Seilwinde
- 255: Regel-, Steuereinrichtung, Fahrtenregler
- 300: Lebewesen, Hund
- 305: Brustgeschirr
- 315: Kopfgeschirr
- 500: Verfahren zur Einschränkung einer Bewegungsfreiheit gemäß einem Ausführungsbeispiel
- 510: Übermitteln des Bewegungsbeschränkungssignals an Empfänger
- 520: Neigen des Kopfes des Lebewesens mittels Bewegungsbeschränkungseinrichtung und Kopplungselement ansprechend auf Bewegungsbeschränkungssignal
- 530: Übermitteln des Bewegungsfreigabesignals an Empfänger
- 540: Lösen der Krafteinwirkung auf den Kopf des Lebewesens ansprechend auf Bewegungsfreigabesignal

## Patentansprüche

1. Verfahren (500) zur Einschränkung einer Bewegungsfreiheit eines Hundes (300), mit folgenden Schritten:
Übermitteln (510) eines Bewegungsbeschränkungssignals (140) an einen dafür vorgesehenen Empfänger einer am Rumpf des Hundes angebrachten Bewegungsbeschränkungseinrichtung (110), welche mittels eines Brustgeschirrs an der Unterseite des Rumpfs in einem Brustbereich des Hundes angebracht ist und mittels eines Kopplungselements (120; 220) mit dem Kopf des Hundes gekoppelt ist; und
ansprechend auf das Bewegungsbeschränkungssignal (140), Ziehen des Kopfes des Hundes (300) in Richtung seines Rumpfs vermittels der Bewegungsbeschränkungseinrichtung (110) und des Kopplungselements (120; 220).

2. Verfahren (500) nach Anspruch 1, wobei die Bewegungsbeschränkungseinrichtung (110) einen Aktuator (235) umfasst, um die Bewegungsbeschränkungseinrichtung (110) und/oder das Kopplungselement (120; 220) anzutreiben und damit eine Kraft auf den Kopf des Hundes (300) auszuüben.

3. Verfahren (500) nach Anspruch 2, wobei der Aktuator (235) ein Elektromotor ist.

4. Verfahren (500) nach einem der vorhergehenden Ansprüche, wobei das Bewegungsbeschränkungssignal (140) von dem Empfänger drahtlos empfangen wird.

5. Verfahren (500) nach Anspruch 4, wobei als Bewegungsbeschränkungssignal (130) ein moduliertes Funksignal, insbesondere ein Frequenzspreizsignal mit einem für das Lebewesen (300) spezifischen Spreizcode, empfangen wird.

6. Verfahren (500) nach einem der vorhergehenden Ansprüche, wobei das Kopplungselement (120) ein mit dem Kopf gekoppeltes Seil (220) ist, und wobei die Bewegungsbeschränkungseinrichtung (110) eine elektromotorisch angetriebene Seilwinde (245) aufweist, um ansprechend auf das Bewegungsbeschränkungssignal (140) das Seil (220) auf eine Trommel der Seilwinde (245) aufzurollen und dadurch den Kopf des Hundes (300) in Richtung seines Rumpfes zu ziehen.

7. Verfahren (500) nach einem der vorhergehenden Ansprüche, wobei eine durch die Bewegungsbeschränkungseinrichtung (110) auf den Kopf des Hundes (300) ausgeübte maximale Zugkraft durch ein kraftbegrenzendes Element begrenzt wird.

8. Verfahren (500) nach Anspruch 7, wobei die maximale Zugkraft der Bewegungsbeschränkungseinrichtung (110) durch ein kraftbegrenzendes Element auf eine Größe und/oder eine Muskelkraft des Hundes (300) angepasst wird.

9. Verfahren (500) nach einem der vorhergehenden Ansprüche, wobei ein Ausmaß eines Neigens und/oder Drehens des Kopfs gegenüber dem Rumpf vermittels einer Steuer- oder Regeleinrichtung (255) gesteuert und/oder geregelt wird.

10. Verfahren (500) nach einem der vorhergehenden Ansprüche, wobei zusätzlich ein Bewegungsfreigabesignal zu empfangen wird, und wobei ansprechend auf das Bewegungsfreigabesignal der gegenüber dem Rumpf geneigte und damit in seiner Bewegung eingeschränkte Kopf des Hundes (300) wieder freigegeben wird.

11. Verfahren (500) nach einem der vorhergehenden Ansprüche, ferner umfassend: Ermitteln einer Entfernung zwischen der Bewegungsbeschränkungseinrichtung (110) und einer Fernbedienung zum Senden des Bewegungsbeschränkungssignals (140).

12. Verfahren (500) nach Anspruch 11, wobei ansprechend auf eine ermittelte Entfernung, die größer als eine vorgebbare Maximalentfernung ist, das Bewegungsbeschränkungssignal (140) ausgelöst wird.

## Claims

1. A method (500) of limiting a freedom of movement of a dog (300), comprising:
transmitting (510) a movement limitation signal (140) to a designated receiver of a movement limitation means (110) attached to the torso of the dog which is attached to a chest area of the dog by means of a chest harness at the bottom side of the torso and coupled to the head of the dog by means of a coupling element (120; 220); and
pulling the head of the dog (300) towards its torso by means of the movement limitation means (110) and the coupling element (120; 220) in response to the movement limitation signal (140).

2. The method (500) of claim 1, wherein the movement limitation means (110) comprises an actuator (235) to drive the movement limitation means (110) and/or the coupling element (120; 220) and thus exert a force onto the head of the living being (300).

3. The method (500) of claim 2, wherein the actuator (235) is an electric motor.

4. The method (500) of any of the preceding claims, wherein the movement limitation signal (140) is received wirelessly by the receiver.

5. The method (500) of claim 2, wherein the movement limitation signal (130) is a modulated radio signal, in particular a frequency spread signal with a spread code which is specific for the living being (300).

6. The method (500) of any of the preceding claims, wherein the coupling element (120) is a rope (220) coupled to the head, and wherein the movement limitation means (110) comprises an electromotively driven rope winch (245) to wind the rope (220) onto a drum of the rope winch (245) in response to the movement limitation signal (140) and thus pull the head of the living being (300) in the direction of its torso.

7. The method (500) of any of the preceding claims, wherein a maximum tensile force exerted onto the head of the living being (300) by the movement limitation means (110) is limited by a force-limiting element.

8. The method (500) of claim 8, wherein the maximum tensile force of the movement limitation means (110) is adapted by a force-limiting element to a size and/or muscle power of the living being (300).

9. The method (500) of any of the preceding claims, wherein an extent of tilting and/or rotating the head with respect to the torso is controlled and/or regulated by means of a control or regulating means (255).

10. The method (500) of any of the preceding claims, wherein additionally a movement enable signal is received, and wherein in response to the movement enable signal the head of the dog which is tilted with respect to the torso and thus limited in its range of movement is released again.

11. The method (500) of any of the preceding claims, further comprising:
determining a distance between the movement limitation means (110) and a remote control for transmitting the movement limitation signal (140).

12. The method (500) of claim 11, wherein the movement limitation signal (140) is triggered in response to a determined distance which is greater than a pre-determinable maximum distance.

## Revendications

1. Procédé (500) destiné à limiter la liberté de mouvement d'un chien (300), comprenant les étapes consistant à :
transmettre (510) un signal de limitation de mouvement (140) à un récepteur, prévu à cet effet, d'un dispositif de limitation de mouvement (110) installé sur le tronc du chien, qui est installé au moyen d'un harnais pectoral sur le dessous du tronc dans une région de la poitrine du chien et qui est couplé à la tête du chien au moyen d'un élément de couplage (120 ; 220); et
en réponse au signal de limitation de mouvement (140), tirer la tête du chien (300) vers son tronc à l'aide du moyen de limitation de mouvement (110) et de l'élément de couplage (120 ; 220).

2. Procédé (500) selon la revendication 1, dans lequel le dispositif de limitation de mouvement (110) comprend un actionneur (235) destiné à entraîner le dispositif de limitation de mouvement (110) et/ou l'élément de couplage (120 ; 220) et à exercer ainsi une force sur la tête de l'être vivant (300).

3. Procédé (500) selon la revendication 2, dans lequel l'actionneur (235) est un moteur électrique.

4. Procédé (500) selon l'une quelconque des revendications précédentes, dans lequel le signal de limitation de mouvement (140) est reçu sans fil par le récepteur.

5. Procédé (500) selon la revendication 4, dans lequel un signal radio modulé, en particulier un signal à étalement de fréquence avec un code d'étalement spécifique à l'être vivant (300), est reçu en tant que signal de limitation de mouvement (130).

6. Procédé (500) selon l'une quelconque des revendications précédentes, **caractérisé en ce que** l'élément de couplage (120) est un câble (220) couplé à la tête, et **en ce que** le dispositif de limitation de mouvement (110) comprend un treuil à entraînement électrique (245) permettant d'enrouler le câble (220) sur un tambour du treuil (245) en réponse au signal de limitation de mouvement (140) et de tirer ainsi la tête de l'être vivant (300) vers son tronc.

7. Procédé (500) selon l'une quelconque des revendications précédentes, dans lequel une force de traction maximale exercée par le dispositif de limitation de mouvement (110) sur la tête de l'être vivant (300) est limitée par un élément de limitation de force.

8. Procédé (500) selon la revendication 7, dans lequel la force de traction maximale du dispositif de limitation de mouvement (110) est adaptée à une taille et/ou à une force musculaire de l'être vivant (300) par un élément de limitation de force.

9. Procédé (500) selon l'une quelconque des revendications précédentes, dans lequel un degré d'inclinaison et/ou de rotation de la tête par rapport au tronc est commandé et/ou régulé au moyen d'un dispositif de commande ou de régulation (255).

10. Procédé (500) selon l'une quelconque des revendications précédentes, dans lequel un signal de libération de mouvement est en outre reçu et dans lequel, en réponse au signal de libération de mouvement, la tête du chien (300) inclinée par rapport au tronc et ainsi limitée dans son mouvement est de nouveau libérée.

11. Procédé (500) selon l'une quelconque des revendications précédentes, consistant en outre à : déterminer une distance entre le dispositif de limitation de mouvement (110) et une télécommande destinée à émettre le signal de limitation de mouvement (140).

12. Procédé (500) selon la revendication 11, dans lequel le signal de limitation de mouvement (140) est déclenché en réponse au fait que la distance déterminée est supérieure à une distance maximale prédéterminée.
